(19) Europäisches Patentamt
European Patent Office
Office européen des brevets

(11) **EP 4 672 653 A1**

(12) **EUROPEAN PATENT APPLICATION**

(43) Date of publication:
**31.12.2025 Bulletin 2026/01**

(21) Application number: **25181801.9**

(22) Date of filing: **10.06.2025**

(51) International Patent Classification (IPC):
**H04L 5/00** (2006.01)        **H04B 7/06** (2006.01)

(52) Cooperative Patent Classification (CPC):
**H04B 7/0695; H04L 5/0023; H04L 5/0094**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 US 202418758997**

(71) Applicant: **Lenovo (Singapore) Pte. Ltd.
New Tech Park 556741 (SG)**

(72) Inventors:
• **ARDAH, Khaled Nafez Rauf
98693 Ilmenau (DE)**
• **GANESAN, Karthikeyan
64569 Heinrich-Heine-Straße 18 (DE)**

(74) Representative: **Openshaw & Co.
8 Castle Street
Farnham, Surrey GU9 7HR (GB)**

(54) **UPLINK RESOURCE MUTING**

(57)    Various aspects of the present disclosure relate to uplink resource muting. An apparatus, such as a UE, receives a first configuration message indicating one or more uplink resource muting patterns each including one or more muting occasions, where at least one of the one or more muting patterns or the one more muting occasions is associated with at least one of a spatial filter, a beam, or a reference signal. The apparatus transmits one or more uplink signals including to mute one or more uplink transmissions of one or more of uplink time-frequency resources associated with at least one spatial filter, beam, or reference signal and based at least in part on the first configuration message.

Figure 7

**Description**

TECHNICAL FIELD

The present disclosure relates to wireless communications, and more specifically to signal interference management in wireless communications.

BACKGROUND

A wireless communications system may include one or multiple network communication devices, such as base stations, which may support wireless communications for one or multiple user communication devices, which may be otherwise known as user equipment (UE), or other suitable terminology. The wireless communications system may support wireless communications with one or multiple user communication devices by utilizing resources of the wireless communication system (e.g., time resources (e.g., symbols, slots, subframes, frames, or the like) or frequency resources (e.g., subcarriers, carriers, or the like). Additionally, the wireless communications system may support wireless communications across various radio access technologies including third generation (3G) radio access technology, fourth generation (4G) radio access technology, fifth generation (5G) radio access technology, among other suitable radio access technologies beyond 5G (e.g., sixth generation (6G)).

The wireless communications system may support wireless communications, and may include one or more devices, such as UEs, base stations (e.g., NEs), network entities, satellites, and/or network equipment (NE), among other devices, that transmit and/or receive signaling.

SUMMARY

An article "a" before an element is unrestricted and understood to refer to "at least one" of those elements or "one or more" of those elements. The terms "a," "at least one," "one or more," and "at least one of one or more" may be interchangeable. As used herein, including in the claims, "or" as used in a list of items (e.g., a list of items prefaced by a phrase such as "at least one of" or "one or more of" or "one or both of") indicates an inclusive list such that, for example, a list of at least one of A, B, or C means A or B or C or AB or AC or BC or ABC (e.g., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on". Further, as used herein, including in the claims, a "set" may include one or more elements.

Some implementations of the method and apparatuses described herein may include a UE for wireless communication to receive a first configuration message indicating one or more uplink resource muting patterns each including one or more muting occasions, wherein at least one of the one or more muting patterns or the one more muting occasions is associated with at least one of a spatial filter, a beam, or a reference signal; and transmit one or more uplink signals including to mute one or more uplink transmissions of one or more of uplink time-frequency resources associated with at least one spatial filter, beam, or reference signal and based at least in part on the first configuration message.

In some implementations of the method and apparatuses for a UE described herein, the spatial filter is based at least in part on a quasi co-location (QCL) relationship of a source reference signal, and wherein the source reference signal is received via one or more of a beam or a spatial filter; where the first configuration message further includes an index of an active muting pattern of a plurality of uplink resource muting patterns; the at least one processor is configured to cause the UE to receive a downlink control message including an indication to activate or deactivate a muting pattern of the plurality of uplink resource muting patterns; at least one uplink resource muting pattern of the one or more uplink resource muting patterns is associated with at least one of a time period, a time-domain period, a semi-persistent behavior, an aperiodic behavior, a number of muting occasions within a pattern period, or a first time-frequency resource configuration for one or more muting occasions; the first time-frequency resource configuration is configured for a first muting occasion, and a second time-frequency resource configuration for a second muting occasion is derived using at least one or more of indicated time-frequency resources of a first occasion, a time offset, a frequency offset, or a collision handling rule if a muting occasion overlaps fully or partially with a configured signal resource.

In some implementations of the method and apparatuses for a UE described herein, the collision handling rule includes an indication to at least one of: apply an uplink resource muting occasion and drop, postpone, or shift the configured signal resource using a determined or an indicated time or frequency shift value; or drop or shift the uplink resource muting occasion using a determined, an indicated time value, or a frequency shift value and transmit the configured signal resource; one or more of: the time offset or the frequency offset are provided explicitly for each occasion, for odd occasions sets, or for even occasions sets; or the time offsets or the frequency offsets for a muting occasion are derived based at least in part on indicated resources of a first muting occasion, an indicated initial offset, or an indicated time or frequency offset pattern; an associated uplink beam indexes set is indicated explicitly for each uplink resource muting pattern or for each muting occasion of a muting pattern, or is determined based on a provided row index of a configured uplink beams codebook; at least one uplink resource muting pattern is associated with at least one indicated bandwidth part (BWP) index, an open or closed loop uplink power control set, or a maximum uplink power threshold.

In some implementations of the method and apparatuses for a UE described herein, the first configuration message configures one or more time-frequency resources of a muting pattern by indicating a row index that points to a row of an uplink resource muting patterns table; the at least one processor is configured to cause the UE to use the uplink resource muting patterns table to determine at least one of a corresponding muting pattern period, a muting pattern frequency domain format or density, slot indexes or subframes where the muting pattern is to be mapped, a starting symbol, a number of muting occasions per slot or subframe, or a muting occasion duration expressed in terms of number of symbols; the at least one processor is configured to cause the UE to one or more of: determine slot indexes based at least in part on an indicated or a configured reference subcarrier spacing; or differentiate the muting pattern frequency domain format based at least in part on a density of muted resource elements or resource blocks; the first configuration message provides a mutingOccasions-FDM message to indicate a number of muting occasions that are frequency-domain multiplexed in one time instance.

Some implementations of the method and apparatuses described herein may further include a processor for wireless communication to receive a first configuration message indicating one or more uplink resource muting patterns each including one or more muting occasions, wherein at least one of the one or more muting patterns or the one more muting occasions is associated with at least one of a spatial filter, a beam, or a reference signal; and transmit one or more uplink signals including to mute one or more uplink transmissions of one or more of uplink time-frequency resources associated with at least one spatial filter, beam, or reference signal and based at least in part on the first configuration message.

In some implementations of the method and apparatuses for a processor described herein, the spatial filter is based at least in part on a QCL-D relationship of a source reference signal, and wherein the source reference signal is received via one or more of a beam or a spatial filter; where the first configuration message further includes an index of an active muting pattern of a plurality of uplink resource muting patterns; the at least one controller is configured to cause the processor to receive a downlink control message including an indication to activate or deactivate a muting pattern of the plurality of uplink resource muting patterns; at least one uplink resource muting pattern of the one or more uplink resource muting patterns is associated with at least one of a time period, a time-domain period, a semi-persistent behavior, an aperiodic behavior, a number of muting occasions within a pattern period, or a first time-frequency resource configuration for one or more muting occasions; the first time-frequency resource configuration is configured for a first muting occasion, and a second time-frequency resource configuration for a second muting occasion is derived using at least one or more of indicated time-frequency resources of a first occasion, a time offset, a frequency offset, or a collision handling rule if a muting occasion overlaps fully or partially with a configured signal resource.

In some implementations of the method and apparatuses for a processor described herein, the collision handling rule includes an indication to at least one of: apply an uplink resource muting occasion and drop, postpone, or shift the configured signal resource using a determined or an indicated time or frequency shift value; or drop or shift the uplink resource muting occasion using a determined, an indicated time value, or a frequency shift value and transmit the configured signal resource; one or more of: the time offset or the frequency offset are provided explicitly for each occasion, for odd occasions sets, or for even occasions sets; or the time offsets or the frequency offsets for a muting occasion are derived based at least in part on indicated resources of a first muting occasion, an indicated initial offset, or an indicated time or frequency offset pattern; an associated uplink beam indexes set is indicated explicitly for each uplink resource muting pattern or for each muting occasion of a muting pattern, or is determined based on a provided row index of a configured uplink beams codebook; at least one uplink resource muting pattern is associated with at least one indicated BWP index, an open or closed loop uplink power control set, or a maximum uplink power threshold.

In some implementations of the method and apparatuses for a processor described herein, the first configuration message configures one or more time-frequency resources of a muting pattern by indicating a row index that points to a row of an uplink resource muting patterns table; the at least one controller is configured to cause the processor to use the uplink resource muting patterns table to determine at least one of a corresponding muting pattern period, a muting pattern frequency domain format or density, slot indexes or subframes where the muting pattern is to be mapped, a starting symbol, a number of muting occasions per slot or subframe, or a muting occasion duration expressed in terms of number of symbols; the at least one controller is configured to cause the processor to one or more of: determine slot indexes based at least in part on an indicated or a configured reference subcarrier spacing; or differentiate the muting pattern frequency domain format based at least in part on a density of muted resource elements or resource blocks; the first configuration message provides a mutingOccasions-FDM message to indicate a number of muting occasions that are frequency-domain multiplexed in one time instance.

Some implementations of the method and apparatuses described herein may further include a method performed by a UE, the method including receiving a first configuration message indicating one or more uplink resource muting patterns each including one or more muting occasions, wherein at least one of the one or more muting patterns or the one more muting occasions is associated with at least one of a spatial filter, a beam, or a reference signal; and transmitting one or more uplink signals including to mute one or more uplink transmissions of one or more of uplink time-frequency resources associated with at least one spatial filter, beam, or reference signal and based at least in part on the first configuration message.

In some implementations of the method and apparatuses for a UE described herein, the spatial filter is based at least in part on a QCL-D relationship of a source reference signal, and wherein the source reference signal is received via one or more of a beam or a spatial filter; where the first configuration message further includes an index of an active muting pattern of a plurality of uplink resource muting patterns; receiving a downlink control message including an indication to activate or deactivate a muting pattern of the plurality of uplink resource muting patterns; at least one uplink resource muting pattern of the one or more uplink resource muting patterns is associated with at least one of a time period, a time-domain period, a semi-persistent behavior, an aperiodic behavior, a number of muting occasions within a pattern period, or a first time-frequency resource configuration for one or more muting occasions; the first time-frequency resource configuration is configured for a first muting occasion, and a second time-frequency resource configuration for a second muting occasion is derived using at least one or more of indicated time-frequency resources of a first occasion, a time offset, a frequency offset, or a collision handling rule if a muting occasion overlaps fully or partially with a configured signal resource.

In some implementations of the method and apparatuses for a UE described herein, the collision handling rule includes an indication to at least one of: apply an uplink resource muting occasion and drop, postpone, or shift the configured signal resource using a determined or an indicated time or frequency shift value; or drop or shift the uplink resource muting occasion using a determined, an indicated time value, or a frequency shift value and transmit the configured signal resource; one or more of: the time offset or the frequency offset are provided explicitly for each occasion, for odd occasions sets, or for even occasions sets; or the time offsets or the frequency offsets for a muting occasion are derived based at least in part on indicated resources of a first muting occasion, an indicated initial offset, or an indicated time or frequency offset pattern; an associated uplink beam indexes set is indicated explicitly for each uplink resource muting pattern or for each muting occasion of a muting pattern, or is determined based on a provided row index of a configured uplink beams codebook; at least one uplink resource muting pattern is associated with at least one indicated BWP index, an open or closed loop uplink power control set, or a maximum uplink power threshold.

In some implementations of the method and apparatuses for a UE described herein, the first configuration message configures one or more time-frequency resources of a muting pattern by indicating a row index that points to a row of an uplink resource muting patterns table; using the uplink resource muting patterns table to determine at least one of a corresponding muting pattern period, a muting pattern frequency domain format or density, slot indexes or subframes where the muting pattern is to be mapped, a starting symbol, a number of muting occasions per slot or subframe, or a muting occasion duration expressed in terms of number of symbols; one or more of: determining slot indexes based at least in part on an indicated or a configured reference subcarrier spacing; or differentiating the muting pattern frequency domain format based at least in part on a density of muted resource elements or resource blocks; the first configuration message provides a mutingOccasions-FDM message to indicate a number of muting occasions that are frequency-domain multiplexed in one time instance.

Some implementations of the method and apparatuses described herein may further include a NE for wireless communication to transmit a first configuration message indicating one or more uplink resource muting patterns each including one or more muting occasions, wherein at least one of the one or more muting patterns or the one more muting occasions is associated with at least one of a spatial filter, a beam, or a reference signal.

In some implementations of the method and apparatuses for a NE described herein, the spatial filter is based at least in part on a QCL-D relationship of a source reference signal, and wherein the source reference signal is received via one or more of a beam or a spatial filter; where the first configuration message further includes an index of an active muting pattern of a plurality of uplink resource muting patterns; the at least one processor is configured to cause the NE to transmit a downlink control message including an indication to activate or deactivate a muting pattern of the plurality of uplink resource muting patterns; at least one uplink resource muting pattern of the one or more uplink resource muting patterns is associated with at least one of a time period, a time-domain period, a semi-persistent behavior, an aperiodic behavior, a number of muting occasions within a pattern period, or a first time-frequency resource configuration for one or more muting occasions; the first time-frequency resource configuration is configured for a first muting occasion, and a second time-frequency resource configuration for a second muting occasion is derived using at least one or more of indicated time-frequency resources of a first occasion, a time offset, a frequency offset, or a collision handling rule if a muting occasion overlaps fully or partially with a configured signal resource.

In some implementations of the method and apparatuses for a NE described herein, the collision handling rule includes an indication to at least one of: apply an uplink resource muting occasion and drop, postpone, or shift the configured signal resource using a determined or an indicated time or frequency shift value; or drop or shift the uplink resource muting occasion using a determined, an indicated time value, or a frequency shift value and transmit the configured signal resource; one or more of: the time offset or the frequency offset are provided explicitly for each occasion, for odd occasions sets, or for even occasions sets; or the time offsets or the frequency offsets for a muting occasion are derived based at least in part on indicated resources of a first muting occasion, an indicated initial offset, or an indicated time or frequency offset pattern; an associated uplink beam indexes set is indicated explicitly for each uplink resource muting pattern or for each muting occasion of a muting pattern, or is determined based on a provided row index of a configured uplink beams codebook; at least one uplink resource muting pattern is associated with at least one indicated BWP index, an open or closed loop uplink power control set, or a maximum uplink power threshold; the first configuration message configures one or more time-frequency resources of a muting pattern by indicating a row index that points to a row of an uplink resource muting patterns table; the first configuration message provides a mutingOccasions-FDM message to indicate a number of muting occasions that are frequency-domain multiplexed in one time instance.

Some implementations of the method and apparatuses described herein may further include a method performed by a NE, the method including transmitting a first configuration message indicating one or more uplink resource muting patterns each including one or more muting occasions, wherein at least one of the one or more muting patterns or the one more muting occasions is associated with at least one of a spatial filter, a beam, or a reference signal.

In some implementations of the method and apparatuses for a NE described herein, the spatial filter is based at least in part on a QCL-D relationship of a source reference signal, and wherein the source reference signal is received via one or more of a beam or a spatial filter; where the first configuration message further includes an index of an active muting pattern of a plurality of uplink resource muting patterns; In some aspects, the techniques described herein relate to a method, further including transmitting a downlink control message including an indication to activate or deactivate a muting pattern of the plurality of uplink resource muting patterns; at least one uplink resource muting pattern of the one or more uplink resource muting patterns is associated with at least one of a time period, a time-domain period, a semi-persistent behavior, an aperiodic behavior, a number of muting occasions within a pattern period, or a first time-frequency resource configuration for one or more muting occasions; the first time-frequency resource configuration is configured for a first muting occasion, and a second time-frequency resource configuration for a second muting occasion is derived using at least one or more of indicated time-frequency resources of a first occasion, a time offset, a frequency offset, or a collision handling rule if a muting occasion overlaps fully or partially with a configured signal resource.

In some implementations of the method and apparatuses for a NE described herein, the collision handling rule includes an indication to at least one of: apply an uplink resource muting occasion and drop, postpone, or shift the configured signal resource using a determined or an indicated time or frequency shift value; or drop or shift the uplink resource muting occasion using a determined, an indicated time value, or a frequency shift value and transmit the configured signal resource; one or more of: the time offset or the frequency offset are provided explicitly for each occasion, for odd occasions sets, or for even occasions sets; or the time offsets or the frequency offsets for a muting occasion are derived based at least in part on indicated resources of a first muting occasion, an indicated initial offset, or an indicated time or frequency offset pattern; an associated uplink beam indexes set is indicated explicitly for each uplink resource muting pattern or for each muting occasion of a muting pattern, or is determined based on a provided row index of a configured uplink beams codebook; at least one uplink resource muting pattern is associated with at least one indicated BWP index, an open or closed loop uplink power control set, or a maximum uplink power threshold; the first configuration message configures one or more time-frequency resources of a muting pattern by indicating a row index that points to a row of an uplink resource muting patterns table; the first configuration message provides a mutingOccasions-FDM message to indicate a number of muting occasions that are frequency-domain multiplexed in one time instance.

BRIEF DESCRIPTION OF THE DRAWINGS

Figure 1 illustrates an example of a wireless communications system in accordance with aspects of the present disclosure.

Figure 2 illustrates an example scenario 200 in accordance with aspects of the present disclosure.

Figure 3 illustrates an example scenario 300 in accordance with aspects of the present disclosure.

Figure 4 illustrates an example of a UE 400 in accordance with aspects of the present disclosure.

Figure 5 illustrates an example of a processor 500 in accordance with aspects of the present disclosure.

Figure 6 illustrates an example of a NE 600 in accordance with aspects of the present disclosure.

Figure 7 illustrates a flowchart of a method 700 in accordance with aspects of the present disclosure.

Figure 8 illustrates a flowchart of a method 800 in accordance with aspects of the present disclosure.

DETAILED DESCRIPTION

In a wireless communications system, a UE and a NE (e.g., a base station, NE) may support wireless communication (e.g., reception and/or transmission of wireless communication) using time-frequency resources. UEs and NEs can communicate in different communication modes, including half-duplex (HD) and full-duplex (FD) modes. In a HD mode, a UE and an NE can transmit and receive signals on a same frequency but not simultaneously. In a FD mode a UE and an NE can perform simultaneous signal transmission and signal reception using a same frequency, which can enable a significant increase in wireless resource utilization. Utilization of FD modes, however, includes a number of challenges including managing different types of signal interference such as self-interference, inter-NE cross-link interference (CLI), and inter-UE CLI.

Some proposals for managing signal interference in FD communications include passive-based techniques. Some passive-based techniques, for instance, utilize antenna and/or frequency-domain isolation (e.g., where downlink and uplink communications are performed using separate antenna arrays and/or over non-overlapped frequency domain resources, respectively), which can be used to attempt to reduce the impact of different interference types in FD communications. In some scenarios, however, passive-based methods might not be sufficient to reduce signal interference to a desired level and, therefore, adaptive-based techniques (e.g., beam-nulling, adaptive scheduling, spatial coordination, etc.) can be employed. However, adaptive-based techniques can rely on the accuracy of self-interference measurement, CLI measurement, and channels estimation, which can be impacted by active uplink transmissions by UEs.

Aspects of the present disclosure are described in the context of a wireless communications system, and include implementations that provide different signaling design and methods for uplink time-frequency resource muting for enhancing the accuracy of self-interference and CLI measurements and channels estimation in FD communications. For instance, detailed time and frequency signaling for uplink muting patterns are provided. In one or more implementations, a UE receives a configuration indicating one or more muting patterns, each associated with at least one of a time period, a time-domain periodic, semi-persistent, or aperiodic behavior, a number of muting occasions within the pattern period, an index indicating the active muting pattern index among multiple configured patterns, and/or a time-frequency resource configuration for one or more muting occasions, e.g., including time and/or frequency offset values for one or more of muting occasions. In one or more implementations, the configuration message configures a muting pattern by indicating a row index that points to a row of a configured uplink resource muting patterns table, where the configured table can be used to determine one or more of above time-frequency muting resources configurations, which has potential of reducing the configuration indication overhead while maintaining the designing flexibility.

Implementations can also increase flexibility by associating uplink muting resources with one or more configurations and conditions. For instance, one or more muting patterns can be associated with one or more explicitly indicated BWP indexes. Alternatively or additionally, one or more indicated muting patterns and/or muting occasions of an indicated muting pattern can be associated with one or more indicated uplink beam indexes sets. Alternatively or additionally, one or more muting patterns and/or muting occasions of an indicated muting pattern can be associated with one or more of an explicitly indicated open or closed loop uplink power control set or a maximum uplink power threshold.

By performing the described techniques, a device in a wireless communications system can experience reduced signal interference and increase signal bandwidth, such as in FD communication scenarios.

Reference is made herein to communicating data or information, such as signaling communication resources and/or communications that are transmitted or received between devices. It is to be appreciated that other terms may be used interchangeably with communicating, such as signaling, transmitting, receiving, outputting, forwarding, retrieving, obtaining, and so forth.

Aspects of the present disclosure are described in the context of a wireless communications system.

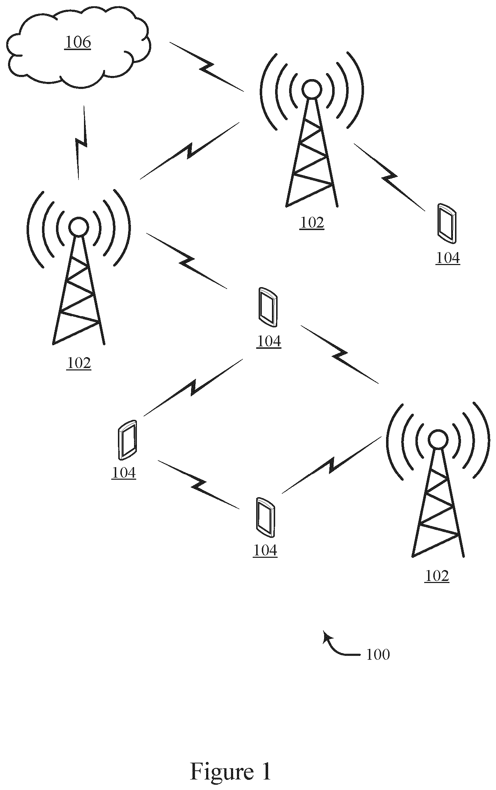

**Figure 1** illustrates an example of a wireless communications system 100 in accordance with aspects of the present disclosure. The wireless communications system 100 may include one or more NEs 102, one or more UEs 104, and a core network (CN) 106. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a NR network, such as a 5G network, a 5G-Advanced (5G-A) network, or a 5G ultrawideband (5G-UWB) network. In other implementations, the wireless communications system 100 may be a combination of a 4G network and a 5G network, or other suitable radio access technology including Institute of Electrical and Electronics Engineers (IEEE) 802.11 (Wi-Fi), IEEE 802.16 (WiMAX), IEEE 802.20. The wireless communications system 100 may support radio access technologies beyond 5G, for example, 6G. Additionally, the wireless communications system 100 may support technologies, such as time division multiple access (TDMA), frequency division multiple access (FDMA), or code division multiple access (CDMA), etc.

The one or more NEs 102 may be dispersed throughout a geographic region to form the wireless communications system 100. One or more of the NEs 102 described herein may be or include or may be referred to as a network node, a base station, a network element, a network function, a network entity, a radio access network (RAN), a NodeB, an eNodeB (eNB), a next-generation NodeB (NE), or other suitable terminology. An NE 102 and a UE 104 may communicate via a communication link, which may be a wireless or wired connection. For example, an NE 102 and a UE 104 may perform wireless communication (e.g., receive signaling, transmit signaling) over a Uu interface.

An NE 102 may provide a geographic coverage area for which the NE 102 may support services for one or more UEs 104 within the geographic coverage area. For example, an NE 102 and a UE 104 may support wireless communication of signals related to services (e.g., voice, video, packet data, messaging, broadcast, etc.) according to one or multiple radio access technologies. In some implementations, an NE 102 may be moveable, for example, a satellite associated with a non-terrestrial network (NTN). In some implementations, different geographic coverage areas associated with the same or different radio access technologies may overlap, but the different geographic coverage areas may be associated with different NE 102.

The one or more UEs 104 may be dispersed throughout a geographic region of the wireless communications system 100. A UE 104 may include or may be referred to as a remote unit, a mobile device, a wireless device, a remote device, a subscriber device, a transmitter device, a receiver device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or machine-type communication (MTC) device, among other examples.

A UE 104 may be able to support wireless communication directly with other UEs 104 over a communication link. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link may be referred to as a sidelink. For example, a UE 104 may support wireless communication directly with another UE 104 over a PC5 interface.

An NE 102 may support communications with the CN 106, or with another NE 102, or both. For example, an NE 102 may interface with other NE 102 or the CN 106 through one or more backhaul links (e.g., S1, N2, N6, or other network interface). In some implementations, the NE 102 may communicate with each other directly. In some other implementations, the NE 102 may communicate with each other indirectly (e.g., via the CN 106). In some implementations, one or more NEs 102 may include subcomponents, such as an access network entity, which may be an example of an access node controller (ANC). An ANC may communicate with the one or more UEs 104 through one or more other access network transmission entities, which may be referred to as a radio heads, smart radio heads, or transmission-reception points (TRPs).

The CN 106 may support user authentication, access authorization, tracking, connectivity, and other access, routing, or mobility functions. The CN 106 may be an evolved packet core (EPC), or a 5G core (5GC), which may include a control plane entity that manages access and mobility (e.g., a mobility management entity (MME), an access and mobility management functions (AMF)) and a user plane entity that routes packets or interconnects to external networks (e.g., a serving gateway (S-GW), a packet data network (PDN) gateway (P-GW), or a user plane function (UPF)). In some implementations, the control plane entity may manage non-access stratum (NAS) functions, such as mobility, authentication, and bearer management (e.g., data bearers, signal bearers, etc.) for the one or more UEs 104 served by the one or more NEs 102 associated with the CN 106.

The CN 106 may communicate with a packet data network over one or more backhaul links (e.g., via an S1, N2, N6, or other network interface). The packet data network may include an application server. In some implementations, one or more UEs 104 may communicate with the application server. A UE 104 may establish a session (e.g., a protocol data unit (PDU) session, or the like) with the CN 106 via an NE 102. The CN 106 may route traffic (e.g., control information, data, and the like) between the UE 104 and the application server using the established session (e.g., the established PDU session). The PDU session may be an example of a logical connection between the UE 104 and the CN 106 (e.g., one or more network functions of the CN 106).

In the wireless communications system 100, the NEs 102 and the UEs 104 may use resources of the wireless communications system 100 (e.g., time resources (e.g., symbols, slots, subframes, frames, or the like) or frequency resources (e.g., subcarriers, carriers)) to perform various operations (e.g., wireless communications). In some implementations, the NEs 102 and the UEs 104 may support different resource structures. For example, the NEs 102 and the UEs 104 may support different frame structures. In some implementations, such as in 4G, the NEs 102 and the UEs 104 may support a single frame structure. In some other implementations, such as in 5G and among other suitable radio access technologies, the NEs 102 and the UEs 104 may support various frame structures (e.g., multiple frame structures). The NEs 102 and the UEs 104 may support various frame structures based on one or more numerologies.

One or more numerologies may be supported in the wireless communications system 100, and a numerology may include a subcarrier spacing and a cyclic prefix. A first numerology (e.g., $\mu$=0) may be associated with a first subcarrier spacing (e.g., 15 kHz) and a normal cyclic prefix. In some implementations, the first numerology (e.g., $\mu=0$) associated with the first subcarrier spacing (e.g., 15 kHz) may utilize one slot per subframe. A second numerology (e.g., $\mu=1$) may be associated with a second subcarrier spacing (e.g., 30 kHz) and a normal cyclic prefix. A third numerology (e.g., $\mu=2$) may be associated with a third subcarrier spacing (e.g., 60 kHz) and a normal cyclic prefix or an extended cyclic prefix. A fourth numerology (e.g., $\mu=3$) may be associated with a fourth subcarrier spacing (e.g., 120 kHz) and a normal cyclic prefix. A fifth numerology (e.g., $\mu=4$) may be associated with a fifth subcarrier spacing (e.g., 240 kHz) and a normal cyclic prefix.

A time interval of a resource (e.g., a communication resource) may be organized according to frames (also referred to as radio frames). Each frame may have a duration, for example, a 10 millisecond (ms) duration. In some implementations, each frame may include multiple subframes. For example, each frame may include 10 subframes, and each subframe may have a duration, for example, a 1 ms duration. In some implementations, each frame may have the same duration. In some implementations, each subframe of a frame may have the same duration.

Additionally or alternatively, a time interval of a resource (e.g., a communication resource) may be organized according to slots. For example, a subframe may include a number (e.g., quantity) of slots. The number of slots in each subframe may also depend on the one or more numerologies supported in the wireless communications system 100. For instance, the first, second, third, fourth, and fifth numerologies (e.g., $\mu=0$, $\mu=1$, $\mu=2$, $\mu=3$, $\mu=4$) associated with respective subcarrier spacings of 15 kHz, 30 kHz, 60 kHz, 120 kHz, and 240 kHz may utilize a single slot per subframe, two slots per subframe, four slots per subframe, eight slots per subframe, and 16 slots per subframe, respectively. Each slot may include a number (e.g., quantity) of symbols (e.g., OFDM symbols). In some implementations, the number (e.g., quantity) of slots for a subframe may depend on a numerology. For a normal cyclic prefix, a slot may include 14 symbols. For an extended cyclic prefix (e.g., applicable for 60 kHz subcarrier spacing), a slot may include 12 symbols. The relationship between the number of symbols per slot, the number of slots per subframe, and the number of slots per frame for a normal cyclic prefix and an extended cyclic prefix may depend on a numerology. It should be understood that reference to a first numerology (e.g., $\mu=0$) associated with a first subcarrier spacing (e.g., 15 kHz) may be used interchangeably between subframes and slots.

In the wireless communications system 100, an electromagnetic (EM) spectrum may be split, based on frequency or wavelength, into various classes, frequency bands, frequency channels, etc. By way of example, the wireless communications system 100 may support one or multiple operating frequency bands, such as frequency range designations FR1 (410 MHz - 7.125 GHz), FR2 (24.25 GHz - 52.6 GHz), FR3 (7.125 GHz - 24.25 GHz), FR4 (52.6 GHz - 114.25 GHz), FR4a or FR4-1 (52.6 GHz - 71 GHz), and FR5 (114.25 GHz - 300 GHz). In some implementations, the NEs 102 and the UEs 104 may perform wireless communications over one or more of the operating frequency bands. In some implementations, FR1 may be used by the NEs 102 and the UEs 104, among other equipment or devices for cellular communications traffic (e.g., control information, data). In some implementations, FR2 may be used by the NEs 102 and the UEs 104, among other equipment or devices for short-range, high data rate capabilities.

FR1 may be associated with one or multiple numerologies (e.g., at least three numerologies). For example, FR1 may be associated with a first numerology (e.g., $\mu=0$), which includes 15 kHz subcarrier spacing; a second numerology (e.g., $\mu=1$), which includes 30 kHz subcarrier spacing; and a third numerology (e.g., $\mu=2$), which includes 60 kHz subcarrier spacing. FR2 may be associated with one or multiple numerologies (e.g., at least 2 numerologies). For example, FR2 may be associated with a third numerology (e.g., $\mu=2$), which includes 60 kHz subcarrier spacing; and a fourth numerology (e.g., $\mu=3$), which includes 120 kHz subcarrier spacing.

According to implementations, one or more of the NEs 102 and the UEs 104 are operable to implement various aspects of the techniques described with reference to the present disclosure. For example, a UE 104 receives, from a NE 102, a first configuration message indicating one or more uplink resource muting patterns each including one or more muting occasions, wherein at least one of the one or more muting patterns or the one more muting occasions is associated with at least one of a spatial filter, a beam, or a reference signal. The UE 104 transmits, to the NE 102, one or more uplink signals including to mute one or more uplink transmissions of one or more of uplink time-frequency resources associated with at least one spatial filter, beam, or reference signal and based at least in part on the first configuration message.

Reference is made herein to communicating data or information, such as signaling communication resources and/or communications that are transmitted or received between devices. It is to be appreciated that other terms may be used interchangeably with communicating, such as signaling, transmitting, receiving, outputting, forwarding, retrieving, obtaining, and so forth.

In some scenarios if beam muting (e.g., nulling) is supported for NE-to-NE CLI handling, it is recommended to specify information exchange of measurement resource configuration, e.g., periodic non-zero power (NZP) channel state information (CSI) reference signals (RS). If non-transparent uplink (UL) resource muting is supported for interference covariance matrix measurement for NE-to-NE CLI handling, the following are recommended to be specified: Definition and indication of UL resource muting pattern; collision with demodulation reference signal (DMRS)/phase tracking reference signal (PTRS); physical uplink shared channel (PUSCH) resource mapping, e.g., rate-matching around the muted resource elements (REs); uplink control information (UCI) resource determination; power allocation in symbols with muted REs considering potential impact to phase continuity; and transport block (TB) size determination. The existing reference signal time-frequency resource pattern (e.g., PT-RS, comb-2 sounding reference signal (SRS)) can be candidates for the UL resource muting pattern.

If non-transparent UL resource muting is supported for NE-to-NE CLI measurement for NE-to-NE CLI handling, the following are recommended to be specified: Definition and indication of UL resource muting pattern; collision with DMRS/PTRS; PUSCH resource mapping, e.g., rate-matching around the muted REs; UCI resource determination; power allocation in symbols with muted REs considering potential impact to phase continuity; TB size determination; and exchange of information across NEs on measurement resources. The existing reference signal time-frequency resource pattern (e.g., CSI-RS) can be used to determine the UL resource muting pattern.

Non-transparent uplink resource muting frameworks have been considered for interference covariance matrix measurement for NE-to-NE CLI handling and for NE-to-NE CLI measurement for NE-to-NE CLI handling. A detailed signaling design (e.g., the time domain related signaling design of such muting patterns), among other aspects, is addressed in the present disclosure. In at least some implementations, a UE receives a configuration indicating one or more muting patterns. Further, each of the muting patterns can be associated with at least one of a spatial filter, beam, a RS to QCL-D relationship (e.g., Rx spatial filter at NE or Tx spatial filter at UE(s)) and time period behavior, a time-domain periodic behavior, semi-persistent behavior, an aperiodic behavior, a number of muting occasions within the pattern period, an index indicating the active muting pattern index among multiple configured patterns, and/or a time-frequency resource configuration for one or more muting occasions, e.g., including time and/or frequency offset values for one or more of muting occasions.

In at least some implementations a configuration message configures a muting pattern by indicating a row index that points to a row of a configured uplink resource muting patterns table. The table, for instance, can be used to determine one or more time-frequency muting resources configurations discussed herein, which can reduce configuration indication overhead while maintaining the flexibility.

In at least some implementations, one or more of indicated muting patterns or muting occasions of an indicated muting pattern can be associated with one or more of an indicated uplink beam indexes set. Further, a same muting pattern can be applied for one or more spatial filters and a configuration can include applying different muting pattern associated with each spatial filter. In examples uplink muting resources can be associated with one or more configurations and conditions. Further, one or more of indicated muting patterns can be associated with one or more explicitly indicated BWP indexes. In one or more examples, one or more muting patterns or muting occasions of an indicated muting pattern can be associated with one or more of an explicitly indicated open or closed loop uplink power control set or a maximum uplink power threshold. Further, application of non-transparent UL resource muting framework can assist in enabling self-interference and inter-UE CLI handling.

In the present disclosure, a UE panel may be a logical entity with physical UE antennas mapped to the logical entity. How to map physical UE antennas to the logical entity may be up to UE implementation. Depending on UE's own implementation, a UE panel can have an operational role of a unit of antenna group to control its Tx beam independently, unit of antenna group to control its transmission power independently, and/or unit of antenna group to control its transmission timing independently. The UE panel may be transparent to NE. For certain condition(s), NE and/or network can assume the mapping between UE's physical antennas to the logical entity UE panel may not be changed. For example, the condition may include until the next update or report from UE or include a duration of time over which the NE assumes there will be no change to the mapping. UE may report its UE capability with respect to the UE panel to the NE or network. The UE capability may include at least the number of UE panels. In at least one implementation, the UE may support UL transmission from one beam within a panel; with multiple panels, more than one beam (one beam per panel) may be used for UL transmission. In another implementation, more than one beam per panel may be supported/used for UL transmission.

In some implementations, the terms antenna, panel, and antenna panel are used interchangeably. An antenna panel may be a hardware that is used for transmitting and/or receiving radio signals at frequencies lower than 6GHz, e.g., frequency range 1 (FR1), or higher than 6GHz, e.g., frequency range 2 (FR2) or millimeter wave (mmWave). In some implementations, an antenna panel may include an array of antenna elements, where each antenna element is connected to hardware such as a phase shifter that allows a control module to apply spatial parameters for transmission and/or reception of signals. The resulting radiation pattern may be called a beam, which may or may not be unimodal and may allow the device to amplify signals that are transmitted or received from spatial directions.

In some implementations, an antenna panel may or may not be virtualized as an antenna port in the specifications. An antenna panel may be connected to a baseband processing module through a radio frequency (RF) chain for each of transmission (egress) and reception (ingress) directions. A capability of a device in terms of the number of antenna panels, their duplexing capabilities, their beamforming capabilities, and so on, may or may not be transparent to other devices. In some implementations, capability information may be communicated via signaling or, in some implementations, capability information may be provided to devices without a need for signaling. In the case that such information is available to other devices, it can be used for signaling or local decision making.

In some implementations, a device (e.g., UE, node) antenna panel may be a physical or logical antenna array including a set of antenna elements or antenna ports that share a common or a significant portion of an RF chain (e.g., in-phase/quadrature (I/Q) modulator, analog to digital (A/D) converter, local oscillator, phase shift network). The device antenna panel or "device panel" may be a logical entity with physical device antennas mapped to the logical entity. The mapping of physical device antennas to the logical entity may be up to device implementation. Communicating (receiving or transmitting) on at least a subset of antenna elements or antenna ports active for radiating energy (also referred to herein as active elements) of an antenna panel requires biasing or powering on of the RF chain which results in current drain or power consumption in the device associated with the antenna panel (including power amplifier/low noise amplifier (LNA) power consumption associated with the antenna elements or antenna ports).

The phrase "active for radiating energy," as used herein, is not meant to be limited to a transmit function but also encompasses a receive function. Accordingly, an antenna element that is active for radiating energy may be coupled to a transmitter to transmit radio frequency energy or to a receiver to receive radio frequency energy, either simultaneously or sequentially, or may be coupled to a transceiver in general, for performing its intended functionality. Communicating on the active elements of an antenna panel enables generation of radiation patterns or beams.

In some implementations, depending on device's own implementation, a "device panel" can have at least one of the following functionalities as an operational role of Unit of antenna group to control its Tx beam independently, Unit of antenna group to control its transmission power independently, Unit of antenna group to control its transmission timing independently. The "device panel" may be transparent to NE. For certain condition(s), NE or network can assume the mapping between device's physical antennas to the logical entity "device panel" may not be changed. For example, the condition may include until the next update or report from device or include a duration of time over which the NE assumes there will be no change to the mapping. A Device may report its capability with respect to the "device panel" to the NE or network. The device capability may include at least the number of "device panels". In one implementation, the device may support UL transmission from one beam within a panel; with multiple panels, more than one beam (one beam per panel) may be used for UL transmission. In another implementation, more than one beam per panel may be supported/used for UL transmission.

In some of the implementations described, an antenna port is defined such that the channel over which a symbol on the antenna port is conveyed can be inferred from the channel over which another symbol on the same antenna port is conveyed.

Two antenna ports are said to be QCL if the large-scale properties of the channel over which a symbol on one antenna port is conveyed can be inferred from the channel over which a symbol on the other antenna port is conveyed. The large-scale properties include one or more of delay spread, Doppler spread, Doppler shift, average gain, average delay, and spatial Rx parameters. Two antenna ports may be quasi-located with respect to a subset of the large-scale properties and different subset of large-scale properties may be indicated by a QCL Type. The QCL Type can indicate which channel properties are the same between the two reference signals (e.g., on the two antenna ports). Thus, the reference signals can be linked to each other with respect to what the UE can assume about their channel statistics or QCL properties. For example, qcl-Type may take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}.

Spatial Rx parameters may include one or more of: angle of arrival (AoA,) Dominant AoA, average AoA, angular spread, Power Angular Spectrum (PAS) of AoA, average AoD (angle of departure), PAS of AoD, transmit/receive channel correlation, transmit/receive beamforming, spatial channel correlation etc.

QCL-TypeA, QCL-TypeB and QCL-TypeC may be applicable for all carrier frequencies, but the QCL-TypeD may be applicable only in higher carrier frequencies (e.g., mmWave, FR2 and beyond), where essentially the UE may not be able to perform omni-directional transmission, e.g. the UE would need to form beams for directional transmission. A QCL-TypeD between two reference signals A and B, the reference signal A is considered to be spatially co-located with reference signal B and the UE may assume that the reference signals A and B can be received with the same spatial filter (e.g., with the same receive beamforming weights).

An "antenna port" according to an implementation may be a logical port that may correspond to a beam (resulting from beamforming) or may correspond to a physical antenna on a device. In some implementations, a physical antenna may map directly to a single antenna port, in which an antenna port corresponds to an actual physical antenna. Alternately, a set or subset of physical antennas, or antenna set or antenna array or antenna sub-array, may be mapped to one or more antenna ports after applying complex weights, a cyclic delay, or both to the signal on each physical antenna. The physical antenna set may have antennas from a single module or panel or from multiple modules or panels. The weights may be fixed as in an antenna virtualization scheme, such as cyclic delay diversity (CDD). The procedure used to derive antenna ports from physical antennas may be specific to a device implementation and transparent to other devices.

In some of the implementations described, a transmission configuration indicator (TCI) state associated with a target transmission can indicate parameters for configuring a quasi-collocation relationship between the target transmission (e.g., target reference signal of Demodulation (DM)-RS ports of the target transmission during a transmission occasion) and a source reference signal(s) (e.g., Synchronization Signal Block (SSB)/CSI-RS/ SRS) with respect to quasi co-location type parameter(s) indicated in the corresponding TCI state. The TCI describes which reference signals are used as QCL source, and what QCL properties can be derived from each reference signal. A device can receive a configuration of a plurality of transmission configuration indicator states for a serving cell for transmissions on the serving cell. In some of the implementations described, a TCI state includes at least one source reference signal to provide a reference (UE assumption) for determining QCL and/or spatial filter.

In some of the implementations described, a spatial relation information associated with a target transmission can indicate parameters for configuring a spatial setting between the target transmission and a reference signal (e.g., SSB/CSI-RS/SRS). For example, the device may transmit the target transmission with the same spatial domain filter used for reception the reference signal (e.g., downlink (DL) reference signal such as SSB/CSI-RS). In another example, the device may transmit the target transmission with the same spatial domain transmission filter used for the transmission of the reference signal (e.g., UL reference signal such as SRS). A device can receive a configuration of a plurality of spatial relation information configurations for a serving cell for transmissions on the serving cell.

In implementations, a UE receives from a NE a configuration message indicating one or more uplink-resource muting patterns where each uplink-resource muting pattern includes one or more muting occasions. The configuration message can indicate for each uplink-resource muting pattern at least one of a time period, a time-domain periodic, semi-persistent, or aperiodic behavior, a number of muting occasions, and/or time-frequency resource configuration for one or more muting occasions. Regarding an index indicating the active muting pattern index among multiple configured patterns, the UE can receive via a separate downlink control configuration message (e.g., via a downlink control information (DCI) or a radio resource control (RRC) message) an indication to activate and/or deactivate a muting pattern index among multiple configured patterns.

Regarding time-frequency resource configurations for one or more muting occasions, in some examples the time-frequency resource configuration can be provided for a first muting occasion. The time-frequency resource configurations for a second muting occasion can be derived, e.g., using one or more of indicated resources of a first occasion, an indicated time offset, an indicated frequency offset, a provided or a preconfigured collision handling rule applied. For instance, if a muting occasion overlaps fully or partially with a configured signal resource, the muting occasion can be applied, and the configured signal resources (e.g., PUSCH resources) can be dropped, postponed, or shifted using a determined or an indicated time or frequency offset/shift value; and/ or the muting occasion is dropped or shifted using a determined or an indicated time or frequency offset/shift value if the muting occasion overlaps fully or partially with a configured signal resource (e.g., physical uplink control channel (PUCCH) resource, or a random access channel (RACH) occasion resource). In at least some implementations, the time or the frequency offsets can be provided explicitly for every occasion or for an indicated occasions set, e.g., odd or even occasions set. In at least some implementations, a time offset and/or a frequency offset for an occasion can be derived based at least in part on indicated resources of a first muting occasion, an indicated initial offset, and/or an indicated time or frequency offset pattern. For instance, the offset value of an occasion can be the summation of all preceding occasions plus an indicated offset value.

In at least some implementations, one or more indicated muting patterns are associated with one or more explicitly indicated BWP indexes (e.g., with an indicated uplink BWP index of a set of configured uplink BWP indexes). The UE, for instance, may mute uplink time-frequency resources if it operates with an associated BWP.

In at least some implementations, one or more indicated muting patterns or muting occasions of an indicated muting pattern can be associated with an indicated uplink beam (e.g., spatial filter) indexes set, and the UE can mute uplink resources when the UE transmits using an associated beam resource. In at least some implementations, an associated uplink beam indexes set can be indicated explicitly for each pattern or for each muting occasion of a pattern. Alternatively or additionally, the associated uplink beam indexes set for each pattern or for each muting occasion of a pattern can be determined based on a provided row index of a configured uplink beams codebook. An NE may measure the interference at the muted resource for each spatial direction. In a first occasion, the UE may apply a first muting resource for the first spatial beam and in a second occasion the UE may apply first or second (e.g., the same or different) muting resource for the second beam, etc. In one or more examples an NE may measure the interference at each of the muting resource configured in a spatial direction.

In at least some implementations, a NE may configure a first muting resource and a second muting resource to be applied for a first beam and a second beam transmitted by UE(s) respectively in a same time occasion to enable the NE to measure interference using these different muting resources at each of the received beams at the same time, e.g., simultaneously. In one or more examples, these different muting resources for different beams may non-overlap, partially overlap, or fully overlap, e.g., depending on the configuration from the NE. In one or more examples inter-UE interference measurement can be performed by configuring one or more muting patterns at one UE for a spatial filter for UL transmission and measuring the interference at second UE on the muted resource, thereby reporting the interference on the muted resource in a spatial direction to gNB for interference mitigation.

In least some implementations, a muting resource may be associated with an NE DL Tx beam which may be the same as that of the NE Rx beam due to beam correspondence. Similarly, the muting resource may be associated with the UE Rx beam which may be the same as that of the UE Tx beam due to the beam correspondence. In cases where beam correspondence is not supported, muting configuration can explicitly provide information related to the NE Rx spatial filter and/or UE Tx spatial filter.

In least some implementations, one or more muting patterns or muting occasions of an indicated muting pattern can be associated with one or more of an explicitly indicated open or closed loop uplink power control set or a maximum uplink power threshold. In such scenarios a UE may mute the uplink transmission if the determined uplink power for an uplink signal is above the indicated threshold, or is determined using an indicated open or closed loop uplink power control set.

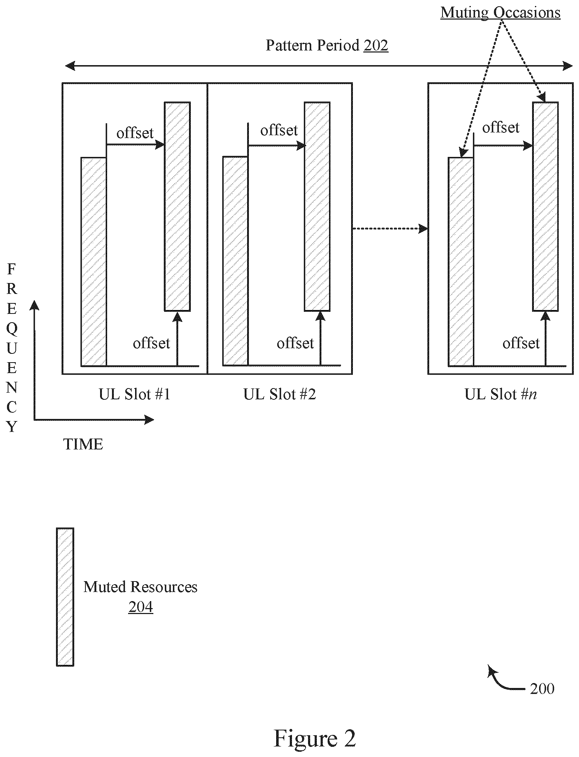

Figure 2 illustrates an example scenario 200 in accordance with aspects of the present disclosure. The scenario 200 includes a pattern period 202 including UL slots 1, 2, ... n. Further, each UL slot includes muted resources 204 that represent time/frequency resources that are muted within each UL slot. The muted resources 204, for instance, represent muting occasions within each UL slot according to implementations described in the present disclosure.

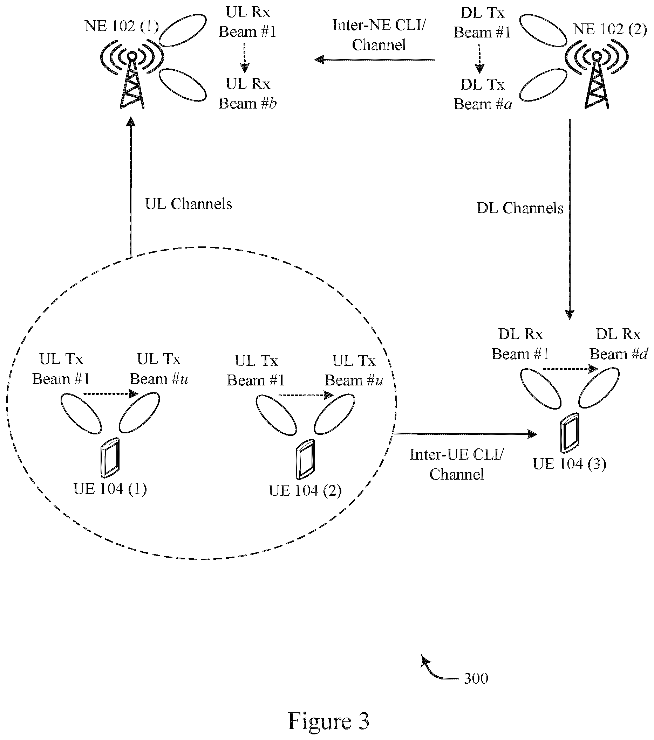

**Figure 3** illustrates an example scenario 300 in accordance with aspects of the present disclosure. The scenario 300 includes a NE 102(1), NE 102(2), UE 104(1), UE 104(2), and UE 104(3). In the scenario 300 inter-NE CLI can occur when the NEs 102(1), 102(2) are operating in FD mode. Accordingly, measurement of the inter-NE CLI can be performed to enable resource muting according to implementations described in the present disclosure. Further, inter-UE CLI can occur when the UEs 104(1), 104(2) are performing UL transmissions and the UE 104(3) is receiving DL transmissions. The inter-UE CLI can be measured to enable resource muting according to implementations described in the present disclosure.

In at least some implementations, a configuration message can configure a muting pattern by indicating a row index that points to a row of a configured uplink resource muting patterns table. The uplink resource muting patterns table can be used to determine information such as at least one of a corresponding pattern period, a pattern frequency domain format/density (e.g., frequency domain pattern muted REs and/or RBs), number and indexes of slots or subframes wherein the muting pattern to be mapped, a starting symbol, a number of muting occasions per slot or subframe, or a muting occasion duration expressed in terms of number of symbols, where the slot indexes can be determined based at least in part on an indicated or a configured reference subcarrier spacing (SCS), e.g., 15 or 30 kHz for FR1 and 60 or 120 kHz for FR2.

An example of uplink resource muting pattern tables are provided below, where Table 1 represents FR1 and Table 2 represents FR2, wherein $x$ value indicates number of radio frames (e.g., pattern period), radio frame indexes $n_f$ can be obtained as $n_f = 0,1, ... , x$ - 1, and $n_f \, mod \, x = y$ operation can determine which radio frames out of $x$ radio frames a muting pattern is mapped to.

In at least some examples, the starting symbol position $l$ of a muting occasion is given by

$$l = l_0 + n_t^{\text{muting}} N_{\text{dur}}^{\text{muting}} + 14 n_{\text{slot}}^{\text{muting}},$$

where

- $l_0$ is given by the parameter "starting symbol" in Tables 1 or 2,

- $n_t^{\text{muting}}$ is the muting occasion within the muting slot, numbered in increasing order from 0 to $N_t^{\text{muting,slot}} - 1$ within a muting slot where $N_t^{\text{muting,slot}}$ is given by Tables 1 or 2,

- $N_{\text{dur}}^{\text{muting}}$ is given by Tables 1 or 2,

- $n_{\text{slot}}^{\text{muting}}$ is obtained based on considered SCS and "Number of muting slots within a subframe" or "Number of muting slots within a $SCS_{\text{ref}}$ kHz slot", e.g., it may be given by

- if SCS $\in$ {1.25, 5,15, 60} kHz, then $n_{\text{slot}}^{\text{muting}} = 0$

- if SCS $\in$ {30, 120} kHz and either of "Number of muting slots within a subframe" in Table 1 or "Number of muting slots within a SCS$_{\text{ref}}$ kHz slot" in Table 2 is equal to 1, then $n_{\text{slot}}^{\text{muting}} = 1$, otherwise $n_{\text{slot}}^{\text{muting}} \in \{0,1\}$.

In at least some implementations, defined muting pattern frequency domain formats (e.g., F0 to Fx) can be differentiated based on their density of muted resource elements (REs) and/or resource blocks (RBs), e.g., following comb-$c$ patterns, $c \in \{1,2,3,4, ... \}$, where the provided "muting duration" in Tables 1 or 2 defines their duration, and wherein a comb-$c$ pattern mutes frequency resources in every $c$ REs and/or RBs. In at least some examples, the configuration message provides a "mutingOccasions-FDM" message to indicate the number of muting occasions that are frequency-domain multiplexed (FDMed) in one time instance, where the number of frequency domain resources (e.g., in terms of REs/RBs) gap between a two FDMed occasions can be indicated and/or configured.

**Table 1: Uplink resource pattern configurations for FR1 and unpaired spectrum.**

| Muting Pattern Index | Muting Pattern Frequency Domain Format | $n_f$ mod $x$ | $x = y$ $y$ | Subframe number | Starting symbol | Number of Muting slots within a subframe | $N_t^{\text{muting,slot}}$, number of time-domain muting occasions within a muting slot | $N_{\text{dur}}^{\text{muting}}$, muting duration |
|---|---|---|---|---|---|---|---|---|
| Index 0 | Format F0 | Integer Nr. | Integer Nr. | Integer Nr. | Integer Nr. | Integer Nr. | Integer Nr. | Integer Nr. |
| ... | ... | ... | ... | ... | ... | ... | ... | ... |
| Index $x_{max}$ | Format Fx | ... | ... | ... | | | | |

**Table 2: Uplink resource pattern configurations for FR2 and unpaired spectrum**

| Muting Pattern Index | Muting Pattern Frequency Domain Format | $n_f$ mod $x = y$ $x$ | $y$ | Slot number | Starting symbol | Number of Muting slots within a SCS$_{\text{ref}}$ kHz slot | $N_t^{\text{muting,slot}}$, number of time-domain muting occasions within a muting slot | $N_{\text{dur}}^{\text{muting}}$, muting duration |
|---|---|---|---|---|---|---|---|---|
| Index 0 | Format F0 | Integer Nr. | Integer Nr. | Integer Nr. | Integer Nr. | Integer Nr. | Integer Nr. | Integer Nr. |
| ... | ... | ... | ... | ... | ... | ... | ... | ... |
| Index $x_{max}$ | Format Fx | ... | ... | ... | | | | |

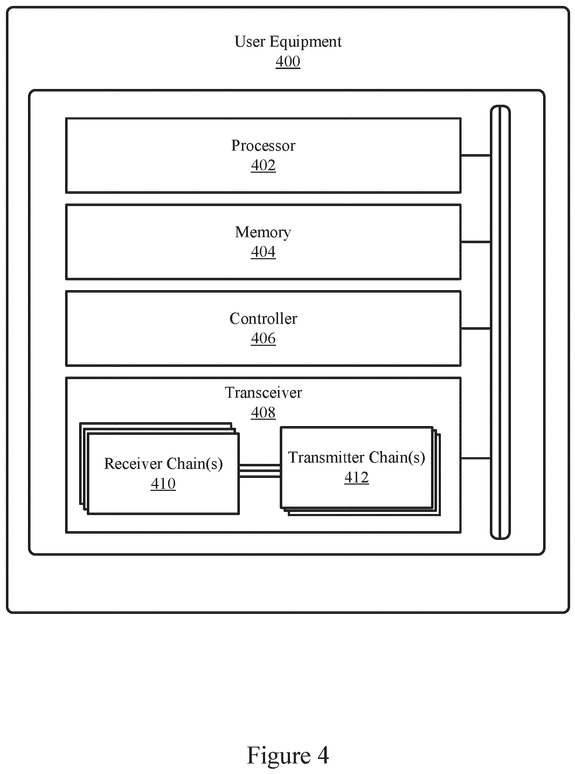

**Figure 4** illustrates an example of a UE 400 in accordance with aspects of the present disclosure. The UE 400 may include a processor 402, a memory 404, a controller 406, and a transceiver 408. The processor 402, the memory 404, the controller 406, or the transceiver 408, or various combinations thereof or various components thereof may be examples of means for performing various aspects of the present disclosure as described herein. These components may be coupled (e.g., operatively, communicatively, functionally, electronically, electrically) via one or more interfaces.

The processor 402, the memory 404, the controller 406, or the transceiver 408, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 402 may include an intelligent hardware device (e.g., a general-purpose processor, a DSP, a CPU, an ASIC, an FPGA, or any combination thereof). In some implementations, the processor 402 may be configured to operate the memory 404. In some other implementations, the memory 404 may be integrated into the processor 402. The processor 402 may be configured to execute computer-readable instructions stored in the memory 404 to cause the UE 400 to perform various functions of the present disclosure.

The memory 404 may include volatile or non-volatile memory. The memory 404 may store computer-readable, computer-executable code including instructions when executed by the processor 402 cause the UE 400 to perform various functions described herein. The code may be stored in a non-transitory computer-readable medium such as the memory 404 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 402 and the memory 404 coupled with the processor 402 may be configured to cause the UE 400 to perform one or more of the functions described herein (e.g., executing, by the processor 402, instructions stored in the memory 404). For example, the processor 402 may support wireless communication at the UE 400 in accordance with examples as disclosed herein. The UE 400 may be configured to or operable to support a means for receiving a first configuration message indicating one or more uplink resource muting patterns each including one or more muting occasions, wherein at least one of the one or more muting patterns or the one more muting occasions is associated with at least one of a spatial filter, a beam, or a reference signal; and transmitting one or more uplink signals including to mute one or more uplink transmissions of one or more of uplink time-frequency resources associated with at least one spatial filter, beam, or reference signal and based at least in part on the first configuration message.

Additionally, the UE 400 may be configured to support any one or combination of where the spatial filter is based at least in part on a QCL-D relationship of a source reference signal, and wherein the source reference signal is received via one or more of a beam or a spatial filter; where the first configuration message further includes an index of an active muting pattern of a plurality of uplink resource muting patterns; receiving a downlink control message including an indication to activate or deactivate a muting pattern of the plurality of uplink resource muting patterns; at least one uplink resource muting pattern of the one or more uplink resource muting patterns is associated with at least one of a time period, a time-domain period, a semi-persistent behavior, an aperiodic behavior, a number of muting occasions within a pattern period, or a first time-frequency resource configuration for one or more muting occasions; the first time-frequency resource configuration is configured for a first muting occasion, and a second time-frequency resource configuration for a second muting occasion is derived using at least one or more of indicated time-frequency resources of a first occasion, a time offset, a frequency offset, or a collision handling rule if a muting occasion overlaps fully or partially with a configured signal resource.

Additionally, the UE 400 may be configured to support any one or combination of where the collision handling rule includes an indication to at least one of: apply an uplink resource muting occasion and drop, postpone, or shift the configured signal resource using a determined or an indicated time or frequency shift value; or drop or shift the uplink resource muting occasion using a determined, an indicated time value, or a frequency shift value and transmit the configured signal resource; one or more of: the time offset or the frequency offset are provided explicitly for each occasion, for odd occasions sets, or for even occasions sets; or the time offsets or the frequency offsets for a muting occasion are derived based at least in part on indicated resources of a first muting occasion, an indicated initial offset, or an indicated time or frequency offset pattern; an associated uplink beam indexes set is indicated explicitly for each uplink resource muting pattern or for each muting occasion of a muting pattern, or is determined based on a provided row index of a configured uplink beams codebook; at least one uplink resource muting pattern is associated with at least one indicated BWP index, an open or closed loop uplink power control set, or a maximum uplink power threshold.

Additionally, the UE 400 may be configured to support any one or combination of where the first configuration message configures one or more time-frequency resources of a muting pattern by indicating a row index that points to a row of an uplink resource muting patterns table; using the uplink resource muting patterns table to determine at least one of a corresponding muting pattern period, a muting pattern frequency domain format or density, slot indexes or subframes where the muting pattern is to be mapped, a starting symbol, a number of muting occasions per slot or subframe, or a muting occasion duration expressed in terms of number of symbols; one or more of: determining slot indexes based at least in part on an indicated or a configured reference subcarrier spacing; or differentiating the muting pattern frequency domain format based at least in part on a density of muted resource elements or resource blocks; the first configuration message provides a mutingOccasions-FDM message to indicate a number of muting occasions that are frequency-domain multiplexed in one time instance.

Additionally, or alternatively, the UE 400 may support at least one memory (e.g., the memory 404) and at least one processor (e.g., the processor 402) coupled with the at least one memory and configured to cause the UE to receive a first configuration message indicating one or more uplink resource muting patterns each including one or more muting occasions, wherein at least one of the one or more muting patterns or the one more muting occasions is associated with at least one of a spatial filter, a beam, or a reference signal; and transmit one or more uplink signals including to mute one or more uplink transmissions of one or more of uplink time-frequency resources associated with at least one spatial filter, beam, or reference signal and based at least in part on the first configuration message.

Additionally, the UE 400 may be configured to support any one or combination of the spatial filter is based at least in part on a QCL-D relationship of a source reference signal, and wherein the source reference signal is received via one or more of a beam or a spatial filter; where the first configuration message further includes an index of an active muting pattern of a plurality of uplink resource muting patterns; the at least one processor is configured to cause the UE to receive a downlink control message including an indication to activate or deactivate a muting pattern of the plurality of uplink resource muting patterns; at least one uplink resource muting pattern of the one or more uplink resource muting patterns is associated with at least one of a time period, a time-domain period, a semi-persistent behavior, an aperiodic behavior, a number of muting occasions within a pattern period, or a first time-frequency resource configuration for one or more muting occasions; the first time-frequency resource configuration is configured for a first muting occasion, and a second time-frequency resource configuration for a second muting occasion is derived using at least one or more of indicated time-frequency resources of a first occasion, a time offset, a frequency offset, or a collision handling rule if a muting occasion overlaps fully or partially with a configured signal resource.

Additionally, the UE 400 may be configured to support any one or combination of the collision handling rule includes an indication to at least one of: apply an uplink resource muting occasion and drop, postpone, or shift the configured signal resource using a determined or an indicated time or frequency shift value; or drop or shift the uplink resource muting occasion using a determined, an indicated time value, or a frequency shift value and transmit the configured signal resource; one or more of: the time offset or the frequency offset are provided explicitly for each occasion, for odd occasions sets, or for even occasions sets; or the time offsets or the frequency offsets for a muting occasion are derived based at least in part on indicated resources of a first muting occasion, an indicated initial offset, or an indicated time or frequency offset pattern; an associated uplink beam indexes set is indicated explicitly for each uplink resource muting pattern or for each muting occasion of a muting pattern, or is determined based on a provided row index of a configured uplink beams codebook; at least one uplink resource muting pattern is associated with at least one indicated BWP index, an open or closed loop uplink power control set, or a maximum uplink power threshold.

Additionally, the UE 400 may be configured to support any one or combination of the first configuration message configures one or more time-frequency resources of a muting pattern by indicating a row index that points to a row of an uplink resource muting patterns table; the at least one processor is configured to cause the UE to use the uplink resource muting patterns table to determine at least one of a corresponding muting pattern period, a muting pattern frequency domain format or density, slot indexes or subframes where the muting pattern is to be mapped, a starting symbol, a number of muting occasions per slot or subframe, or a muting occasion duration expressed in terms of number of symbols; the at least one processor is configured to cause the UE to one or more of: determine slot indexes based at least in part on an indicated or a configured reference subcarrier spacing; or differentiate the muting pattern frequency domain format based at least in part on a density of muted resource elements or resource blocks; the first configuration message provides a mutingOccasions-FDM message to indicate a number of muting occasions that are frequency-domain multiplexed in one time instance.

The controller 406 may manage input and output signals for the UE 400. The controller 406 may also manage peripherals not integrated into the UE 400. In some implementations, the controller 406 may utilize an operating system such as iOS®, ANDROID®, WINDOWS®, or other operating systems. In some implementations, the controller 406 may be implemented as part of the processor 402.

In some implementations, the UE 400 may include at least one transceiver 408. In some other implementations, the UE 400 may have more than one transceiver 408. The transceiver 408 may represent a wireless transceiver. The transceiver 408 may include one or more receiver chains 410, one or more transmitter chains 412, or a combination thereof.

A receiver chain 410 may be configured to receive signals (e.g., control information, data, packets) over a wireless medium. For example, the receiver chain 410 may include one or more antennas to receive a signal over the air or wireless medium. The receiver chain 410 may include at least one amplifier (e.g., a low-noise amplifier (LNA)) configured to amplify the received signal. The receiver chain 410 may include at least one demodulator configured to demodulate the receive signal and obtain the transmitted data by reversing the modulation technique applied during transmission of the signal. The receiver chain 410 may include at least one decoder for decoding the demodulated signal to receive the transmitted data.

A transmitter chain 412 may be configured to generate and transmit signals (e.g., control information, data, packets). The transmitter chain 412 may include at least one modulator for modulating data onto a carrier signal, preparing the signal for transmission over a wireless medium. The at least one modulator may be configured to support one or more techniques such as amplitude modulation (AM), frequency modulation (FM), or digital modulation schemes like phase-shift keying (PSK) or quadrature amplitude modulation (QAM). The transmitter chain 412 may also include at least one power amplifier configured to amplify the modulated signal to an appropriate power level suitable for transmission over the wireless medium. The transmitter chain 412 may also include one or more antennas for transmitting the amplified signal into the air or wireless medium.

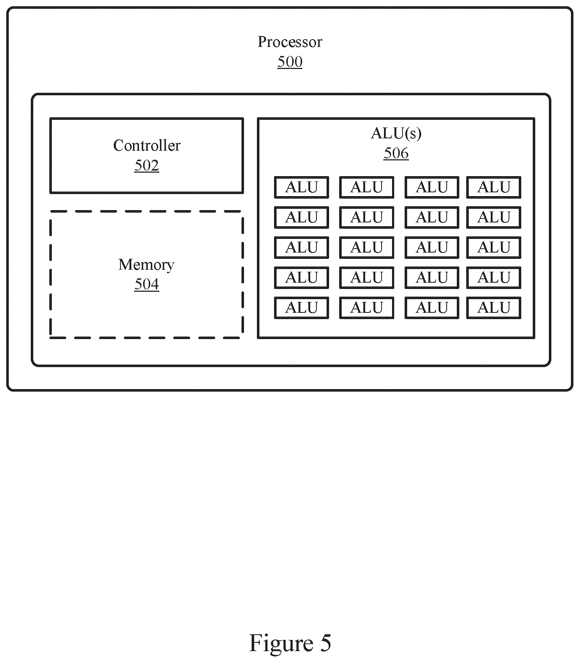

**Figure 5** illustrates an example of a processor 500 in accordance with aspects of the present disclosure. The processor 500 may be an example of a processor configured to perform various operations in accordance with examples as described herein. The processor 500 may include a controller 502 configured to perform various operations in accordance with examples as described herein. The processor 500 may optionally include at least one memory 504, which may be, for example, an L1/L2/L3 cache. Additionally, or alternatively, the processor 500 may optionally include one or more arithmetic-logic units (ALUs) 506. One or more of these components may be in electronic communication or otherwise coupled (e.g., operatively, communicatively, functionally, electronically, electrically) via one or more interfaces (e.g., buses).

The processor 500 may be a processor chipset and include a protocol stack (e.g., a software stack) executed by the processor chipset to perform various operations (e.g., receiving, obtaining, retrieving, transmitting, outputting, forwarding, storing, determining, identifying, accessing, writing, reading) in accordance with examples as described herein. The processor chipset may include one or more cores, one or more caches (e.g., memory local to or included in the processor chipset (e.g., the processor 500) or other memory (e.g., random access memory (RAM), read-only memory (ROM), dynamic RAM (DRAM), synchronous dynamic RAM (SDRAM), static RAM (SRAM), ferroelectric RAM (FeRAM), magnetic RAM (MRAM), resistive RAM (RRAM), flash memory, phase change memory (PCM), and others).

The controller 502 may be configured to manage and coordinate various operations (e.g., signaling, receiving, obtaining, retrieving, transmitting, outputting, forwarding, storing, determining, identifying, accessing, writing, reading) of the processor 500 to cause the processor 500 to support various operations in accordance with examples as described herein. For example, the controller 502 may operate as a control unit of the processor 500, generating control signals that manage the operation of various components of the processor 500. These control signals include enabling or disabling functional units, selecting data paths, initiating memory access, and coordinating timing of operations.

The controller 502 may be configured to fetch (e.g., obtain, retrieve, receive) instructions from the memory 504 and determine subsequent instruction(s) to be executed to cause the processor 500 to support various operations in accordance with examples as described herein. The controller 502 may be configured to track memory addresses of instructions associated with the memory 504. The controller 502 may be configured to decode instructions to determine the operation to be performed and the operands involved. For example, the controller 502 may be configured to interpret the instruction and determine control signals to be output to other components of the processor 500 to cause the processor 500 to support various operations in accordance with examples as described herein. Additionally, or alternatively, the controller 502 may be configured to manage flow of data within the processor 500. The controller 502 may be configured to control transfer of data between registers, ALUs 506, and other functional units of the processor 500.

The memory 504 may include one or more caches (e.g., memory local to or included in the processor 500 or other memory, such as RAM, ROM, DRAM, SDRAM, SRAM, MRAM, flash memory, etc. In some implementations, the memory 504 may reside within or on a processor chipset (e.g., local to the processor 500). In some other implementations, the memory 504 may reside external to the processor chipset (e.g., remote to the processor 500).

The memory 504 may store computer-readable, computer-executable code including instructions that, when executed by the processor 500, cause the processor 500 to perform various functions described herein. The code may be stored in a non-transitory computer-readable medium such as system memory or another type of memory. The controller 502 and/or the processor 500 may be configured to execute computer-readable instructions stored in the memory 504 to cause the processor 500 to perform various functions. For example, the processor 500 and/or the controller 502 may be coupled with or to the memory 504, the processor 500, and the controller 502, and may be configured to perform various functions described herein. In some examples, the processor 500 may include multiple processors and the memory 504 may include multiple memories. One or more of the multiple processors may be coupled with one or more of the multiple memories, which may, individually or collectively, be configured to perform various functions herein.

The one or more ALUs 506 may be configured to support various operations in accordance with examples as described herein. In some implementations, the one or more ALUs 506 may reside within or on a processor chipset (e.g., the processor 500). In some other implementations, the one or more ALUs 506 may reside external to the processor chipset (e.g., the processor 500). One or more ALUs 506 may perform one or more computations such as addition, subtraction, multiplication, and division on data. For example, one or more ALUs 506 may receive input operands and an operation code, which determines an operation to be executed. One or more ALUs 506 may be configured with a variety of logical and arithmetic circuits, including adders, subtractors, shifters, and logic gates, to process and manipulate the data according to the operation. Additionally, or alternatively, the one or more ALUs 506 may support logical operations such as AND, OR, exclusive-OR (XOR), not-OR (NOR), and not-AND (NAND), enabling the one or more ALUs 506 to handle conditional operations, comparisons, and bitwise operations.

The processor 500 may support wireless communication in accordance with examples as disclosed herein. The processor 500 may be configured to or operable to support at least one controller (e.g., the controller 502) coupled with at least one memory (e.g., the memory 504) and configured to cause the processor to receive a first configuration message indicating one or more uplink resource muting patterns each including one or more muting occasions, wherein at least one of the one or more muting patterns or the one more muting occasions is associated with at least one of a spatial filter, a beam, or a reference signal; and transmit one or more uplink signals including to mute one or more uplink transmissions of one or more of uplink time-frequency resources associated with at least one spatial filter, beam, or reference signal and based at least in part on the first configuration message.

Additionally, the processor 500 may be configured to or operable to support any one or combination of where the spatial filter is based at least in part on a QCL-D relationship of a source reference signal, and wherein the source reference signal is received via one or more of a beam or a spatial filter; where the first configuration message further includes an index of an active muting pattern of a plurality of uplink resource muting patterns; the at least one controller is configured to cause the processor to receive a downlink control message including an indication to activate or deactivate a muting pattern of the plurality of uplink resource muting patterns; at least one uplink resource muting pattern of the one or more uplink resource muting patterns is associated with at least one of a time period, a time-domain period, a semi-persistent behavior, an aperiodic behavior, a number of muting occasions within a pattern period, or a first time-frequency resource configuration for one or more muting occasions; the first time-frequency resource configuration is configured for a first muting occasion, and a second time-frequency resource configuration for a second muting occasion is derived using at least one or more of indicated time-frequency resources of a first occasion, a time offset, a frequency offset, or a collision handling rule if a muting occasion overlaps fully or partially with a configured signal resource.

Additionally, the processor 500 may be configured to or operable to support any one or combination of where the collision handling rule includes an indication to at least one of: apply an uplink resource muting occasion and drop, postpone, or shift the configured signal resource using a determined or an indicated time or frequency shift value; or drop or shift the uplink resource muting occasion using a determined, an indicated time value, or a frequency shift value and transmit the configured signal resource; one or more of: the time offset or the frequency offset are provided explicitly for each occasion, for odd occasions sets, or for even occasions sets; or the time offsets or the frequency offsets for a muting occasion are derived based at least in part on indicated resources of a first muting occasion, an indicated initial offset, or an indicated time or frequency offset pattern; an associated uplink beam indexes set is indicated explicitly for each uplink resource muting pattern or for each muting occasion of a muting pattern, or is determined based on a provided row index of a configured uplink beams codebook; at least one uplink resource muting pattern is associated with at least one indicated BWP index, an open or closed loop uplink power control set, or a maximum uplink power threshold.

Additionally, the processor 500 may be configured to or operable to support any one or combination of where the first configuration message configures one or more time-frequency resources of a muting pattern by indicating a row index that points to a row of an uplink resource muting patterns table; the at least one controller is configured to cause the processor to use the uplink resource muting patterns table to determine at least one of a corresponding muting pattern period, a muting pattern frequency domain format or density, slot indexes or subframes where the muting pattern is to be mapped, a starting symbol, a number of muting occasions per slot or subframe, or a muting occasion duration expressed in terms of number of symbols; the at least one controller is configured to cause the processor to one or more of: determine slot indexes based at least in part on an indicated or a configured reference subcarrier spacing; or differentiate the muting pattern frequency domain format based at least in part on a density of muted resource elements or resource blocks; the first configuration message provides a mutingOccasions-FDM message to indicate a number of muting occasions that are frequency-domain multiplexed in one time instance.

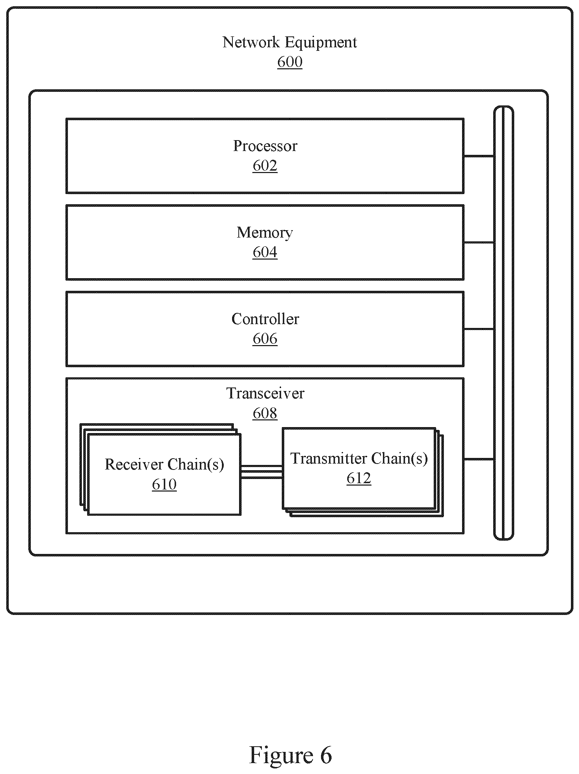

**Figure 6** illustrates an example of a NE 600 in accordance with aspects of the present disclosure. The NE 600 may include a processor 602, a memory 604, a controller 606, and a transceiver 608. The processor 602, the memory 604, the controller 606, or the transceiver 608, or various combinations thereof or various components thereof may be examples of means for performing various aspects of the present disclosure as described herein. These components may be coupled (e.g., operatively, communicatively, functionally, electronically, electrically) via one or more interfaces.

The processor 602, the memory 604, the controller 606, or the transceiver 608, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 602 may include an intelligent hardware device (e.g., a general-purpose processor, a DSP, a CPU, an ASIC, an FPGA, or any combination thereof). In some implementations, the processor 602 may be configured to operate the memory 604. In some other implementations, the memory 604 may be integrated into the processor 602. The processor 602 may be configured to execute computer-readable instructions stored in the memory 604 to cause the NE 600 to perform various functions of the present disclosure.

The memory 604 may include volatile or non-volatile memory. The memory 604 may store computer-readable, computer-executable code including instructions when executed by the processor 602 cause the NE 600 to perform various functions described herein. The code may be stored in a non-transitory computer-readable medium such as the memory 604 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 602 and the memory 604 coupled with the processor 602 may be configured to cause the NE 600 to perform one or more of the functions described herein (e.g., executing, by the processor 602, instructions stored in the memory 604). For example, the processor 602 may support wireless communication at the NE 600 in accordance with examples as disclosed herein. The NE 600 may be configured to or operable to support a means for transmitting a first configuration message indicating one or more uplink resource muting patterns each including one or more muting occasions, wherein at least one of the one or more muting patterns or the one more muting occasions is associated with at least one of a spatial filter, a beam, or a reference signal; and receiving one or more uplink signals based at least in part on the first configuration message.

Additionally, the NE 600 may be configured to or operable to support any one or combination of where the spatial filter is based at least in part on a QCL-D relationship of a source reference signal, and wherein the source reference signal is received via one or more of a beam or a spatial filter; where the first configuration message further includes an index of an active muting pattern of a plurality of uplink resource muting patterns; In some aspects, the techniques described herein relate to a method, further including transmitting a downlink control message including an indication to activate or deactivate a muting pattern of the plurality of uplink resource muting patterns; at least one uplink resource muting pattern of the one or more uplink resource muting patterns is associated with at least one of a time period, a time-domain period, a semi-persistent behavior, an aperiodic behavior, a number of muting occasions within a pattern period, or a first time-frequency resource configuration for one or more muting occasions; the first time-frequency resource configuration is configured for a first muting occasion, and a second time-frequency resource configuration for a second muting occasion is derived using at least one or more of indicated time-frequency resources of a first occasion, a time offset, a frequency offset, or a collision handling rule if a muting occasion overlaps fully or partially with a configured signal resource.

Additionally, the NE 600 may be configured to or operable to support any one or combination of where the collision handling rule includes an indication to at least one of: apply an uplink resource muting occasion and drop, postpone, or shift the configured signal resource using a determined or an indicated time or frequency shift value; or drop or shift the uplink resource muting occasion using a determined, an indicated time value, or a frequency shift value and transmit the configured signal resource; one or more of: the time offset or the frequency offset are provided explicitly for each occasion, for odd occasions sets, or for even occasions sets; or the time offsets or the frequency offsets for a muting occasion are derived based at least in part on indicated resources of a first muting occasion, an indicated initial offset, or an indicated time or frequency offset pattern; an associated uplink beam indexes set is indicated explicitly for each uplink resource muting pattern or for each muting occasion of a muting pattern, or is determined based on a provided row index of a configured uplink beams codebook; at least one uplink resource muting pattern is associated with at least one indicated BWP index, an open or closed loop uplink power control set, or a maximum uplink power threshold; the first configuration message configures one or more time-frequency resources of a muting pattern by indicating a row index that points to a row of an uplink resource muting patterns table; the first configuration message provides a mutingOccasions-FDM message to indicate a number of muting occasions that are frequency-domain multiplexed in one time instance.

Additionally, or alternatively, the NE 600 may support at least one memory (e.g., the memory 604) and at least one processor (e.g., the processor 602) coupled with the at least one memory and configured to cause the NE to transmit a first configuration message indicating one or more uplink resource muting patterns each including one or more muting occasions, wherein at least one of the one or more muting patterns or the one more muting occasions is associated with at least one of a spatial filter, a beam, or a reference signal; and receive one or more uplink signals based at least in part on the first configuration message.

Additionally, the NE 600 may be configured to support any one or combination of where the spatial filter is based at least in part on a QCL-D relationship of a source reference signal, and wherein the source reference signal is received via one or more of a beam or a spatial filter; where the first configuration message further includes an index of an active muting pattern of a plurality of uplink resource muting patterns; the at least one processor is configured to cause the NE to transmit a downlink control message including an indication to activate or deactivate a muting pattern of the plurality of uplink resource muting patterns; at least one uplink resource muting pattern of the one or more uplink resource muting patterns is associated with at least one of a time period, a time-domain period, a semi-persistent behavior, an aperiodic behavior, a number of muting occasions within a pattern period, or a first time-frequency resource configuration for one or more muting occasions; the first time-frequency resource configuration is configured for a first muting occasion, and a second time-frequency resource configuration for a second muting occasion is derived using at least one or more of indicated time-frequency resources of a first occasion, a time offset, a frequency offset, or a collision handling rule if a muting occasion overlaps fully or partially with a configured signal resource.

Additionally, the NE 600 may be configured to support any one or combination of where the collision handling rule includes an indication to at least one of: apply an uplink resource muting occasion and drop, postpone, or shift the configured signal resource using a determined or an indicated time or frequency shift value; or drop or shift the uplink resource muting occasion using a determined, an indicated time value, or a frequency shift value and transmit the configured signal resource; one or more of: the time offset or the frequency offset are provided explicitly for each occasion, for odd occasions sets, or for even occasions sets; or the time offsets or the frequency offsets for a muting occasion are derived based at least in part on indicated resources of a first muting occasion, an indicated initial offset, or an indicated time or frequency offset pattern; an associated uplink beam indexes set is indicated explicitly for each uplink resource muting pattern or for each muting occasion of a muting pattern, or is determined based on a provided row index of a configured uplink beams codebook; at least one uplink resource muting pattern is associated with at least one indicated BWP index, an open or closed loop uplink power control set, or a maximum uplink power threshold; the first configuration message configures one or more time-frequency resources of a muting pattern by indicating a row index that points to a row of an uplink resource muting patterns table; the first configuration message provides a mutingOccasions-FDM message to indicate a number of muting occasions that are frequency-domain multiplexed in one time instance.

The controller 606 may manage input and output signals for the NE 600. The controller 606 may also manage peripherals not integrated into the NE 600. In some implementations, the controller 606 may utilize an operating system such as iOS®, ANDROID®, WINDOWS®, or other operating systems. In some implementations, the controller 606 may be implemented as part of the processor 602.

In some implementations, the NE 600 may include at least one transceiver 608. In some other implementations, the NE 600 may have more than one transceiver 608. The transceiver 608 may represent a wireless transceiver. The transceiver 608 may include one or more receiver chains 610, one or more transmitter chains 612, or a combination thereof.

A receiver chain 610 may be configured to receive signals (e.g., control information, data, packets) over a wireless medium. For example, the receiver chain 610 may include one or more antennas to receive a signal over the air or wireless medium. The receiver chain 610 may include at least one amplifier (e.g., a low-noise amplifier (LNA)) configured to amplify the received signal. The receiver chain 610 may include at least one demodulator configured to demodulate the receive signal and obtain the transmitted data by reversing the modulation technique applied during transmission of the signal. The receiver chain 610 may include at least one decoder for decoding the demodulated signal to receive the transmitted data.

A transmitter chain 612 may be configured to generate and transmit signals (e.g., control information, data, packets). The transmitter chain 612 may include at least one modulator for modulating data onto a carrier signal, preparing the signal for transmission over a wireless medium. The at least one modulator may be configured to support one or more techniques such as amplitude modulation (AM), frequency modulation (FM), or digital modulation schemes like phase-shift keying (PSK) or quadrature amplitude modulation (QAM). The transmitter chain 612 may also include at least one power amplifier configured to amplify the modulated signal to an appropriate power level suitable for transmission over the wireless medium. The transmitter chain 612 may also include one or more antennas for transmitting the amplified signal into the air or wireless medium.

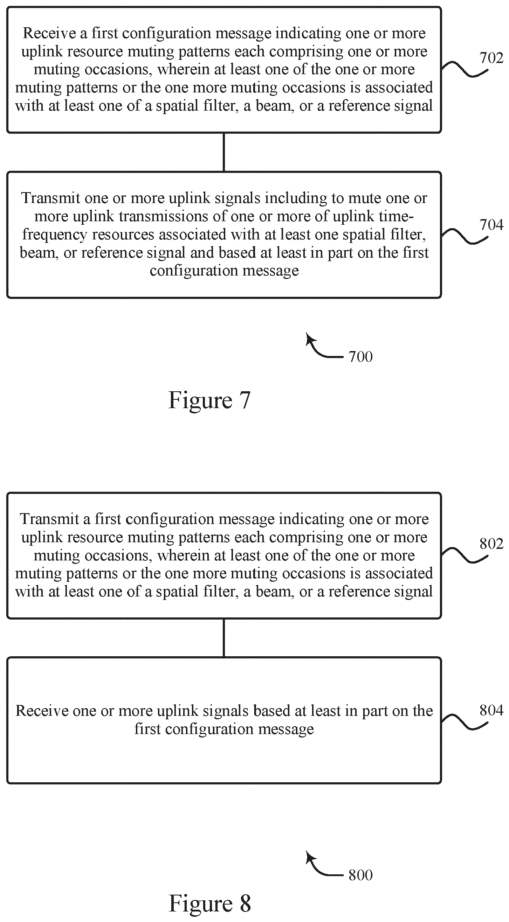

**Figure 7** illustrates a flowchart of a method 700 in accordance with aspects of the present disclosure. The operations of the method may be implemented by a UE as described herein. In some implementations, the UE may execute a set of instructions to control the function elements of the UE to perform the described functions. It should be noted that the method described herein describes a possible implementation, and that the operations and the steps may be rearranged or otherwise modified and that other implementations are possible.

At 702, the method may include receiving a first configuration message indicating one or more uplink resource muting patterns each including one or more muting occasions, wherein at least one of the one or more muting patterns or the one more muting occasions is associated with at least one of a spatial filter, a beam, or a reference signal. The operations of 702 may be performed in accordance with examples as described herein. In some implementations, aspects of the operations of 702 may be performed by a UE as described with reference to Figure 4.

At 704, the method may include transmitting one or more uplink signals including to mute one or more uplink transmissions of one or more of uplink time-frequency resources associated with at least one spatial filter, beam, or reference signal and based at least in part on the first configuration message. The operations of 704 may be performed in accordance with examples as described herein. In some implementations, aspects of the operations of 704 may be performed by a UE as described with reference to Figure 4.

**Figure 8** illustrates a flowchart of a method 800 in accordance with aspects of the present disclosure. The operations of the method may be implemented by a NE as described herein. In some implementations, the NE may execute a set of instructions to control the function elements of the NE to perform the described functions. It should be noted that the method described herein describes a possible implementation, and that the operations and the steps may be rearranged or otherwise modified and that other implementations are possible.

At 802, the method may include transmitting a first configuration message indicating one or more uplink resource muting patterns each including one or more muting occasions, wherein at least one of the one or more muting patterns or the one more muting occasions is associated with at least one of a spatial filter, a beam, or a reference signal. The operations of 802 may be performed in accordance with examples as described herein. In some implementations, aspects of the operations of 802 may be performed by a NE as described with reference to Figure 6.

At 804, the method may include receiving one or more uplink signals based at least in part on the first configuration message. The operations of 804 may be performed in accordance with examples as described herein.

In some implementations, aspects of the operations of 804 may be performed by a NE as described with reference to Figure 6.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

**Claims**

1. A user equipment, UE, for wireless communication, comprising:

   at least one memory; and
   at least one processor coupled with the at least one memory and configured to cause the UE to:

      receive a first configuration message indicating one or more uplink resource muting patterns each comprising one or more muting occasions, wherein at least one of the one or more muting patterns or the one more muting occasions is associated with at least one of a spatial filter, a beam, or a reference signal; and
      transmit one or more uplink signals including to mute one or more uplink transmissions of one or more of uplink time-frequency resources associated with at least one spatial filter, beam, or reference signal and based at least in part on the first configuration message.

2. The UE of claim 1, wherein the spatial filter is based at least in part on a quasi co-location, QCL-D relationship of a source reference signal, and wherein the source reference signal is received via one or more of a beam or a spatial filter.

3. The UE of claim 1 or claim 2, wherein where the first configuration message further comprises an index of an active muting pattern of a plurality of uplink resource muting patterns.

4. The UE of claim 3, wherein the at least one processor is configured to cause the UE to receive a downlink control message comprising an indication to activate or deactivate a muting pattern of the plurality of uplink resource muting patterns.

5. The UE of any preceding claim, wherein at least one uplink resource muting pattern of the one or more uplink resource muting patterns is associated with at least one of a time period, a time-domain period, a semi-persistent behavior, an aperiodic behavior, a number of muting occasions within a pattern period, or a first time-frequency resource configuration for one or more muting occasions.

6. The UE of claim 5, wherein the first time-frequency resource configuration is configured for a first muting occasion, and a second time-frequency resource configuration for a second muting occasion is derived using at least one or more of indicated time-frequency resources of a first occasion, a time offset, a frequency offset, or a collision handling rule if a muting occasion overlaps fully or partially with a configured signal resource.

7. The UE of claim 6, wherein the collision handling rule comprises an indication to at least one of:

   apply an uplink resource muting occasion and drop, postpone, or shift the configured signal resource using a determined or an indicated time or frequency shift value; or
   drop or shift the uplink resource muting occasion using a determined, an indicated time value, or a frequency shift value and transmit the configured signal resource.

8. The UE of claim 6, wherein one or more of:

   the time offset or the frequency offset are provided explicitly for each occasion, for odd occasions sets, or for even occasions sets; or
   the time offsets or the frequency offsets for a muting occasion are derived based at least in part on indicated resources of a first muting occasion, an indicated initial offset, or an indicated time or frequency offset pattern.

9. The UE of any preceding claim, wherein an associated uplink beam indexes set is indicated explicitly for each uplink resource muting pattern or for each muting occasion of a muting pattern, or is determined based on a provided row index of a configured uplink beams codebook.

10. The UE of any preceding claim, wherein at least one uplink resource muting pattern is associated with at least one indicated bandwidth part, BWP, index, an open or closed loop uplink power control set, or a maximum uplink power threshold.

11. The UE of any preceding claim, wherein the first configuration message configures one or more time-frequency resources of a muting pattern by indicating a row index that points to a row of an uplink resource muting patterns table,

optionally wherein the at least one processor is configured to cause the UE to use the uplink resource muting patterns table to determine at least one of a corresponding muting pattern period, a muting pattern frequency domain format or density, slot indexes or subframes where the muting pattern is to be mapped, a starting symbol, a number of muting occasions per slot or subframe, or a muting occasion duration expressed in terms of number of symbols, and
optionally wherein the at least one processor is configured to cause the UE to one or more of:

determine slot indexes based at least in part on an indicated or a configured reference subcarrier spacing; or differentiate the muting pattern frequency domain format based at least in part on a density of muted resource elements or resource blocks.

12. The UE of any preceding claim, wherein the first configuration message provides a *mutingOccasions*-FDMmessage to indicate a number of muting occasions that are frequency-domain multiplexed in one time instance.

13. A processor for wireless communication, comprising:
at least one controller coupled with at least one memory and configured to cause the processor to:

receive a first configuration message indicating one or more uplink resource muting patterns each comprising one or more muting occasions, wherein at least one of the one or more muting patterns or the one more muting occasions is associated with at least one of a spatial filter, a beam, or a reference signal; and
transmit one or more uplink signals including to mute one or more uplink transmissions of one or more of uplink time-frequency resources associated with at least one spatial filter, beam, or reference signal and based at least in part on the first configuration message.

14. A network equipment for wireless communication, comprising:

at least one memory; and
at least one processor coupled with the at least one memory and configured to cause the network equipment to:
transmit a first configuration message indicating one or more uplink resource muting patterns each comprising one or more muting occasions, wherein at least one of the one or more muting patterns or the one more muting occasions is associated with at least one of a spatial filter, a beam, or a reference signal.

15. A method for wireless communication performed by a user equipment, UE, the method comprising:

receiving a first configuration message indicating one or more uplink resource muting patterns each comprising one or more muting occasions, wherein at least one of the one or more muting patterns or the one more muting occasions is associated with at least one of a spatial filter, a beam, or a reference signal; and
transmitting one or more uplink signals including to mute one or more uplink transmissions of one or more of uplink time-frequency resources associated with at least one spatial filter, beam, or reference signal and based at least in part on the first configuration message.

Figure 1

Figure 2

Figure 3

User Equipment
400

Processor
402

Memory
404

Controller
406

Transceiver
408

Receiver Chain(s)
410

Transmitter Chain(s)
412

Figure 4

Processor
500

Controller
502

Memory
504

ALU(s)
506

| ALU | ALU | ALU | ALU |
| ALU | ALU | ALU | ALU |
| ALU | ALU | ALU | ALU |
| ALU | ALU | ALU | ALU |
| ALU | ALU | ALU | ALU |

Figure 5

Network Equipment
600

Processor
602

Memory
604

Controller
606

Transceiver
608

Receiver Chain(s)
610

Transmitter Chain(s)
612

Figure 6

Receive a first configuration message indicating one or more uplink resource muting patterns each comprising one or more muting occasions, wherein at least one of the one or more muting patterns or the one more muting occasions is associated with at least one of a spatial filter, a beam, or a reference signal ⌇ 702

Transmit one or more uplink signals including to mute one or more uplink transmissions of one or more of uplink time-frequency resources associated with at least one spatial filter, beam, or reference signal and based at least in part on the first configuration message ⌇ 704

700

Figure 7

Transmit a first configuration message indicating one or more uplink resource muting patterns each comprising one or more muting occasions, wherein at least one of the one or more muting patterns or the one more muting occasions is associated with at least one of a spatial filter, a beam, or a reference signal ⌇ 802

Receive one or more uplink signals based at least in part on the first configuration message ⌇ 804

800

Figure 8

Europäisches
Patentamt

European
Patent Office

Office européen
des brevets

# EUROPEAN SEARCH REPORT

**Application Number**

EP 25 18 1801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/217477 A1 (IBRAHIM ABDELRAHMAN MOHAMED AHMED MOHAMED [US] ET AL) 6 July 2023 (2023-07-06) | 1,3-15 | INV. H04L5/00 H04B7/06 |
| Y | * paragraphs [0111], [0118] - [0124], [0135], [0138], [0150], [0182], [0185]; figures 2-5, 9 * | 2 | |
| Y | QUALCOMM INCORPORATED: "On potential enhancements on dynamic/flexible TDD", 3GPP DRAFT; R1-2207232, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Toulouse; 20220822 - 20220826 13 August 2022 (2022-08-13), XP052275168, Retrieved from the Internet: URL:https://ftp.3gpp.org/tsg_ran/WG1_RL1/T SGR1_110/Docs/R1-2207232.zip R1-2207232 On potential enhancements on dynamic, flexible TDD.docx [retrieved on 2022-08-13] | 2 | |
| A | * Sections 5 and 6; page 6 - page 18 * | 1,3-15 | TECHNICAL FIELDS SEARCHED (IPC) H04L H04B |

-----

-----

-/--

The present search report has been drawn up for all claims

| Place of search | Date of completion of the search | Examiner |
|---|---|---|
| The Hague | 14 November 2025 | Lähteenmäki, Laura |

EPO FORM 1503 03.82 (P04C01)

Europäisches
Patentamt

European
Patent Office

Office européen
des brevets

## EUROPEAN SEARCH REPORT

**Application Number**

EP 25 18 1801

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAN CHENG ET AL: "Study on potential enhancements on dynamic/flexible TDD", 3GPP DRAFT; R1-2210878; TYPE DISCUSSION; FS_NR_DUPLEX_EVO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Toulouse, FR; 20221114 - 20221118 7 November 2022 (2022-11-07), XP052221441, Retrieved from the Internet: URL:https://www.3gpp.org/ftp/TSG_RAN/WG1_R L1/TSGR1_111/Docs/R1-2210878.zip R1-2210878.docx [retrieved on 2022-11-07] * Sections 2.2.1.2 and 2.3; page 8 - page 14 * | 1-15 | |
| | ----- | | |
| | -/-- | | |
| | | | **TECHNICAL FIELDS SEARCHED (IPC)** |

The present search report has been drawn up for all claims

| Place of search | Date of completion of the search | Examiner |
|---|---|---|
| The Hague | 14 November 2025 | Lähteenmäki, Laura |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ..........................................................................................

& : member of the same patent family, corresponding
   document

EPO FORM 1503 03.82 (P04C01)

Europäisches
Patentamt

European
Patent Office

Office européen
des brevets

**EUROPEAN SEARCH REPORT**

Application Number

EP 25 18 1801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARTIN BEALE ET AL: "CLI Handling for SBFD", 3GPP DRAFT; R1-2404499; TYPE DISCUSSION; NR_DUPLEX_EVO-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka City, Fukuoka, JP; 20240520 - 20240524 10 May 2024 (2024-05-10), XP052608794, Retrieved from the Internet: URL:https://www.3gpp.org/ftp/TSG_RAN/WG1_R L1/TSGR1_117/Docs/R1-2404499.zip R1-2404499 - Rel-19 Duplex Evo - 9.3.3 CLI v01.docx [retrieved on 2024-05-10] * Section 2.1.2; page 4 - page 5 * | 1-15 | |

-----

TECHNICAL FIELDS
SEARCHED (IPC)

The present search report has been drawn up for all claims

| Place of search | Date of completion of the search | Examiner |
|---|---|---|
| The Hague | 14 November 2025 | Lähteenmäki, Laura |

EPO FORM 1503 03.82 (P04C01)

page 3 of 3

## ANNEX TO THE EUROPEAN SEARCH REPORT
## ON EUROPEAN PATENT APPLICATION NO.

EP 25 18 1801

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2025

| Patent document cited in search report | Publication date | Patent family member(s) | Publication date |
|---|---|---|---|
| US 2023217477 A1 | 06-07-2023 | US 2023217477 A1 | 06-07-2023 |
| | | US 2024172263 A1 | 23-05-2024 |

EPO FORM P0459

For more details about this annex : see Official Journal of the European Patent Office, No. 12/82